# EUROPEAN PATENT SPECIFICATION

(11) **EP 1 728 583 B1**
(45) Date of publication and mention of the grant of the patent: **01.04.2015**
(21) Application number: 06000269.8
(22) Date of filing: 07.01.2006
(51) Int. Cl.: B23K 35/36, B23K 35/362

(54) **Improving slag detachability**
Verbessern der Schlacken-Abnehmbarkeit
Amélioration de capacite de démoulage de scories

(30) Priority: 31.05.2005 US 141484
(43) Date of publication of application: 06.12.2006
(73) Proprietor: Lincoln Global, Inc., City of Industry, CA 91748 (US)
(72) Inventor: Singh, Daya, Bainbridge Township Ohio 44023 (US); Narayanan, Badri K., Mayfield Heights, OH 44124 (US); Soltis, Patrick T., Shaker Hts. Ohio 44120 (US)
(74) Representative: Grosse Schumacher Knauer von Hirschhausen

(56) References cited:
- JP-A- 56 141 992
- JP-A- 59 007 495
- JP-A- 60 108 194
- SU-A1- 1 606 297
- US-A- 4 551 610
- US-A1- 2003 116 550
- US-B1- 6 339 209

## Description

The present invention relates to the art of arc welding and more particularly, improving the ease with which slag can be removed from arc welds.

### BACKGROUND OF INVENTION

Most common metal joining methods using an electric arc are gas-metal arc welding with solid (GMAW) or metal-cored wires (GMAW-C), gas shielded flux-cored arc welding (FCAW-G), self-shielded flux-cored arc welding (FCAW-S), shielded metal arc welding (SMAW) and submerged arc welding (SAW).

Flux-cored electrodes are used increasingly as an alternative to solid wires because of increased productivity during welding fabrication of structural components. Flux-cored electrodes are composite electrodes consisting of a core (fill) material surrounded by a metallic outer sheath. The core consists mainly of iron powder and alloying and fluxing ingredients to help with arc stability, weld wetting and appearance etc., such that the desired appearance and mechanical properties are obtained in the weld. Flux-cored electrodes provide increased deposition rates and produce a wider, more consistent weld penetration profile compared to solid electrodes. Moreover, they provide improved arc action, generate less fume and spatter, and provide weld deposits with better wetting compared to solid electrodes and allow out of position welding. However, these productivity improvements are sometimes offset by the expense incurred because of the time required to remove slag deposits or islands, which form on the surface of the weld.

One of the main functions of fluxing agents in welding is to produce a slag which will cover and protect the surface of the weld pool from the atmosphere. Slag is formed by melting the fluxing agents, it is a deoxidation product from the reaction between the flux, atmosphere, molten sheath and alloy components in the core. Slag can become trapped in the weld when two adjacent weld beads are deposited with inadequate overlap and poor bead shape and a void is formed. When the next layer is deposited, the entrapped slag is not melted out. Slag may also become entrapped in cavities in multi-pass welds through excessive undercut in the weld toe or the uneven surface profile of the preceding weld runs.

The ability to remove slag with relative ease is an important factor in welding processes using flux. Time and effort required to remove slag lowers productivity. Incomplete removal of slag can lead to weld defects like slag inclusions, lower the corrosion resistance of the weld and impair the appearance of the weldment and can compromise weldment integrity.

The composition of the flux plays an important role in the risk of slag inclusions through its effect on the weld bead shape and the ease with which the slag can be removed. Melting point of the slag has an effect on the amount of inclusions in the weld metal and the ability to weld out of position. A weld pool with low oxygen content will have a high surface tension producing a convex weld bead with poor parent metal wetting. Thus, an oxidizing flux, containing for example iron oxide, produces a low surface tension weld pool with a more concave weld bead profile, and promotes wetting into the parent metal. High silicate flux produces a glass-like slag, often self-detaching. Fluxes with a lime content produce an adherent slag which is difficult to remove.

The ease of slag removal varies depending upon the type of flux used. For rutile or acid fluxes, i.e. large amounts of titanium oxide (rutile) with some silicates, the oxygen level of the weld pool is high enough to produce a flat or slightly convex weld bead. The fluidity of the slag is determined by the calcium fluoride content. Fluoride-free coatings designed for welding in the flat position produce smooth bead profiles and an easily removed slag. The more fluid fluoride slag designed for positional welding is less easily removed. For basic fluxes, the high proportion of calcium carbonate (limestone) and calcium fluoride (fluorspar) in the flux reduces the oxygen content of the weld pool and therefore its surface tension. The slag is more fluid than that produced with the rutile coating. Fast freezing also assists welding in the vertical and overhead positions but the slag coating is more difficult to remove. Consequently, the risk of slag inclusions is significantly greater with basic fluxes due to the inherent convex weld bead profile and the difficulty in removing the slag from the weld toes especially in multi-pass welds.

Efforts toward slag removal have concentrated on tailoring the composition of the flux and/or core (fill) of a metal-core electrode. Several fill compositions have been developed to address the slag removal problem. In United States Patent No. 4,345,140 to Godai, a flux composition used in a cored electrode for welding stainless steel is disclosed. Godai discloses that the addition of low melting point metallic oxides such as lead oxide, copper oxide, bismuth oxide, antimony oxide or tin oxide is useful for enhancing the separability of slag from the underlying weld.

Another fill composition having improved slag removal is disclosed in United States Patent No. 6,608,284 to Nikodym. Nikodym discloses a fill composition for a mild steel or low alloy steel electrode. Nikodym distinguishes the disclosed fill composition from the fill composition disclosed in Godai on the basis that Godai is directed to a flux-cored electrode for stainless steel welding which is fundamentally different from metal-cored electrodes for mild steel and low alloy steel welding. Nikodym asserts that flux-cored electrodes for use in the welding of stainless steel include a flux composition consisting of nonmetallic inorganic components that are present in significantly higher percentages (e.g., 5 to 10%) than in metal-cored electrodes for use in the welding of mild or low alloy metals, thus resulting in the slag covering the entire surface and adhering strongly to the weld bead thereby making it very difficult to remove. The fill composition disclosed in Nikodym includes the addition of antimony, bismuth and/or germanium to a weld metal to cause slag deposits or islands on the weld metal to form at positions away from the toe or edge of mild and low alloy steel weld beads, thereby facilitating the removal of the slag deposits or islands.

For the FCAW-S electrodes Al and Mg are used for removing oxygen and nitrogen from the molten weld metal and form a major part of slag as their respective oxides. Although efforts have been directed to reducing the extent and occurrence of slag deposits, such as by the addition of various elements to the flux or core (fill) material, a need remains for another strategy for facilitating slag removal.

US 4551610 discloses a formulation for the flux in a cored-type electric arc welding electrode which produces high impact value welds while welding vertically up or overhead and at greater melt-off rates than heretofore. The major flux ingredients are lithium oxide, iron oxide, silicon dioxide, lithium carbonate, magnesium and aluminum metal powders, all in a carefully balanced formula to give excellent operator appeal and excellent slag removal. The arc welding electrode comprised of a tube of low carbon steel having on the inside thereof as major ingredients, as percentage of total electrode weight: Lithium oxide (Li02): 1.8-3.2% One or more amphoteric oxides selected from the class consisting of Fex Oy and Mnx Oy : 6.0-23% Aluminum: 2.5-5.0% Magnesium: 0.2-2.2%. In the slag systems that generate a high level of alumina in solution, the rate of slag solidification is normally much too slow. Alumina and aluminates tend to have high latent heats which result in a slow rate of transformation from liquid to solid. To compensate for this the addition of magnesite or magnesium metal to the system is provided. By controlling the amounts of alumina and magnesite in the slag, the proper balance between these phases will properly locate and freeze the slag to achieve acceptable weld bead profile. The flux ingredients do not contain any aluminum oxides. On the other hand, one of the principal ingredients in the resultant slag is aluminum oxide. This aluminum oxide results from the reaction of the aluminum powder in the flux ingredients with the various oxides of lithium, iron, manganese, silicon and/or titanium, resulting in the formation of aluminum oxide and the release of the metal of the oxide which, in the case of the lithium, shields the arc from the atmosphere and, in the case of the acid or amphoteric oxides, results in release of the metals and their transfer to the weld bead either as iron or as an alloying ingredient. Manganese, of course, is considered desirable as a residual and silicon is satisfactory as an ingredient, providing it is not present in excessive amounts. For optimum bead profile, the level of magnesium or magnesia must be carefully controlled.

### THE INVENTION

In a first aspect, the present invention provides a method for facilitating removal of slag otherwise having a weight ratio of aluminum oxide to magnesium oxide of about 1:1, respectively, or less with regard to the amount of aluminum oxide, resulting from arc welding a cored electrode. The method comprises adjusting the flux composition in the electrode such that the weight ratio of aluminum oxide to magnesium oxide in the slag is about 2:1, respectively, or more with regard to the amount of aluminum oxide.

In another aspect, the present invention provides a method for facilitating removal of slag otherwise having a weight ratio of aluminum oxide to magnesium oxide of about 1:1, respectively, or less with regard to the amount of aluminum oxide, resulting from arc welding a cored electrode. The method comprises adjusting the welding electrode composition such that the atomic ratio, i.e the atomic weight ratio, of total aluminum to total magnesium in the welding electrode is about 3:2, respectively, or more with regard to the amount of aluminum.

In yet another aspect according to the present invention, a method for facilitating the removal of slag resulting from arc welding a cored electrode is provided. The method comprises using a cored electrode having an atomic ratio of total aluminum to total magnesium in the cored electrode of from about 3:2, respectively, or more with regard to the amount of aluminum.

In yet a further aspect according to the present invention, a cored metal electrode adapted for self-shielded flux cored arc welding processes is provided. The electrode comprises a atomic ratio of total aluminum to total magnesium of at least about 3:2, respectively, with an upper limit of aluminum in the electrode corresponding to about 1.1% by weight aluminum in the resulting weld metal.

### BRIEF DESCRIPTION OF DRAWING

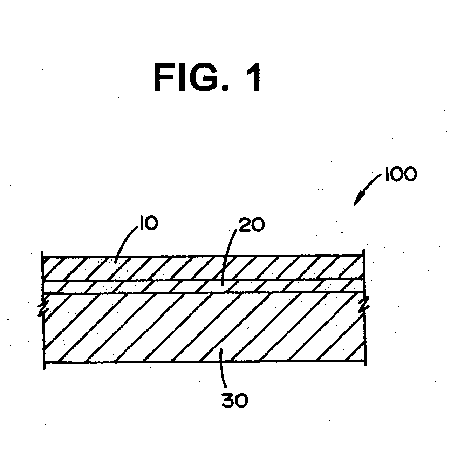

FIGURE 1 is a schematic cross-sectional view of a weld layer, a slag layer, and the interface therebetween.

### PREFERRED EMBODIMENTS

Slag formation is an integral part of self-shielded FCAW-S (self-shielded flux-cored arc welding) processes. Aluminum and magnesium are the primary deoxidizing and denitriding agents used in the electrode to deposit a porosity-free weld metal. Almost all of the magnesium and most of the aluminum present in the electrode end up in the slag as oxides. However, limits exist as to the maximum amount of aluminum that can be incorporated in the electrode.

Aluminum in the weld deposit has a detrimental effect on toughness of the weld metal, and that factor often limits the amount of aluminum in the electrode. Therefore, a certain amount of magnesium is used in conjunction with aluminum. When equal weight amounts of aluminum oxide (Al₂O₃) and magnesium oxide (MgO) are present in the slag, the slag detachability is poor.

In accordance with the present discovery, as the weight amount of aluminum oxide is increased to about two or more times that of magnesium oxide in the slag, the detachability of the slag significantly improves. This weight ratio of aluminum oxide to magnesium oxide in the slag can also be represented as a atomic weight ratio of elemental aluminum to elemental magnesium in the electrode. If the weight ratio of elemental aluminum to magnesium is maintained at about 3:2 or more (with regard to the amount of aluminum) in the electrode, the slag detachability is significantly improved. These ratios can also be altered by adding or reducing different amounts of oxide in the electrode. For example, a 1:1 atomic ratio of Al:Mg in an electrode can be altered with a 5% addition of aluminum oxide to the electrode or with a reduction of 5% of magnesium oxide from the electrode. Thermodynamic modelling of the phase structure of the slag suggests that this improvement results from the change in amounts of MgO and spinel-type phases (MgO-Al₂O₃) in the resulting slag.

Spinels make up a complex oxide class with a close-packed oxygen ion matrix and divalent and trivalent metallic cations which are positioned in interstitial sites. Spinel compounds are a very common oxide phase found in the slags formed during arc welding of carbon and alloy steels. These structures often include various oxides of aluminum and magnesium. Spinels exhibit a crystal lattice structure that readily bonds to an iron substrate.

Referring to FIGURE 1, a schematic cross section 100 is illustrated depicting a layer of slag 10 disposed on weld metal 30. An interface 20 is defined between the slag 10 and the weld metal 30. It will be appreciated by those skilled in the art that FIGURE 1 is not to scale, and the thicknesses of the layers are not necessarily as depicted. In fact, the thickness of the interface 20 will likely be significantly thinner, than shown. Generally, the ease or difficulty in removing the slag 10 from weld metal 30 depends upon the extent of bonding between those regions within or along the interface 20. Although not wishing to be bound to any particular theory, it is believed that the slag layer 10 can be very difficult to remove from the weld metal 30 due to the close similarity between the metal lattice structure of weld metal 30, and the crystal lattice structure within the interface 20 which, for welding electrodes including aluminum and magnesium, contain spinels. As noted, it is believed that spinels exhibit a crystal lattice structure that readily bonds to iron substrates.

In accordance with the present invention, by adjusting the atomic ratio of aluminum to magnesium in the electrode or the welding composition to 3:2 or more, the resulting crystal lattice structure within the interface 20 is disrupted, thereby decreasing the extent of bonding between the slag layer 10 and the weld metal 30. Alternately, the invention can also be performed by using a welding composition or an electrode that contains a atomic ratio of aluminum to magnesium of 3:2 or more, respectively (with regard to the aluminum content). Moreover, the invention can be performed by using a welding composition, an electrode, and/or welding conditions such that the weight ratio of aluminum oxide to magnesium oxide in the slag is about 2:1, respectively, or more (with regard to the amount of aluminum oxide). Specifically, particular welding compositions can be used to achieve desired ratios of aluminum oxide to magnesium oxide in the slag. The term "welding composition" as used herein generally refers to the composition of the electrode, but can also refer to the collective composition if more than one electrode is used, or an electrode and one or more ancillary feeds of alloying elements are utilized.

The slag composition can be altered by modifying the ratio of aluminum-bearing and magnesium-bearing agents in the electrode or the welding composition. Specifically, this can be performed by the addition of aluminum, aluminum oxide, ferro-aluminum, or intermetallics of aluminum in the electrode or the welding composition. This can also be performed by reducing the amounts of the magnesium or magnesium-bearing agents such as magnesium oxide in the electrode or the welding composition.

More specifically, in accordance with a preferred aspect of the present invention, a method is provided for improving slag detachability characteristics of a flux cored electrode having an electrode composition in which the atomic ratio of Al:Mg in the electrode is less than about 1.5:1 (with regard to the aluminum content) to about 1:1, respectively. The method involves either (i) increasing the amount of aluminum or (ii) decreasing the amount of magnesium in the electrode such that the atomic ratio of Al:Mg in the electrode is greater than about 1.5:1, such as about 1.6:1, about 1.7:1, about 1.8:1, about 1.9:1, about 2:1, and more than 2:1 for example. The upper limit of the amount of aluminum depends upon the particular application and requirements of the resulting weld. Certain applications may dictate that the amount of aluminum in the final weld should not exceed about 1.4% by weight.

In accordance with another preferred aspect of the present invention, a flux cored electrode is provided which exhibits excellent slag detachability properties when used in a welding process. The atomic weight ratio of the total amount of aluminum to the total amount of magnesium in the electrode is about 1.5:1 or greater than 1.5:1, respectively. As noted, a cored electrode is a continuously fed tubular metal sheath with a core of powdered flux and/or alloying ingredients. These may include fluxing elements, deoxidizing and denitriding agents, and alloying materials, as well as elements that increase toughness and strength, improve corrosion resistance, and stabilize the arc. Typical core materials may include aluminum, calcium, carbon, chromium, iron, manganese, and other elements and materials. While flux-cored electrodes are more widely used, metal-cored products are useful for adjusting the filler metal composition when welding alloy steels. The powders in metal-cored electrodes generally are metal and alloy powders, rather than compounds, producing only small islands of slag on the face of the weld. By contrast, flux-cored electrodes produce an extensive slag cover during welding, which supports and shapes the bead.

Various empirical or qualitative approaches exist for designating the ease (or difficulty) with which slag can be removed from a weld. One such approach is the use of a five unit system in which 5 stands for the worst or most difficult to remove, while 1 designates the easiest to remove. An example of such a system is as follows:

**Table 1**

| **SLAG REMOVAL RATING SYSTEM** | |
|---|---|
| SLAG REMOVAL DIFFICULTY | DESCRIPTION |
| 1 | Slag easily removed, can be peeled off. |
| 2 | Slag easily removed by brushing, light scraping or raking. |
| 3 | Slag moderately removable by scraping or light chipping. |
| 4 | Slag difficult to remove, requires extensive chipping or light grinding. |
| 5 | Slag exceedingly difficult to remove, removable only by extensive grinding. |

The preferred embodiment welding electrodes featuring the noted ratios of Al:Mg as described herein, produce slags that fall into the 1 to 2 region of the rating system set forth in Table 1. Corresponding electrodes including Al and Mg, however in ratios of about 1:1, or otherwise outside the preferred ranges described herein, produce slags that fall in the 4 to 5 region of the rating system. This improvement in slag removal constitutes a significant advance in the art and is expected to be commercially important.

Additional details of arc welding materials and specifically, cored electrodes for welding are provided in U.S. Patents 5,369,244; 5,365,036; 5,233,160; 5,225,661; 5,132,514; 5,120,931; 5,091,628; 5,055,655; 5,015,823; 5,003,155; 4,833,296; 4,723,061; 4,717,536; 4,551,610; and 4,186,293; all of which are hereby incorporated by reference.

The foregoing description is, at present, considered to be the preferred embodiments of the present invention. However, it is contemplated that various changes and modifications apparent to those skilled in the art, may be made without departing from the present invention. Therefore, the foregoing description is intended to cover all such changes and modifications encompassed within the spirit and scope of the present invention, including all equivalent aspects.

## Claims

1. A method for facilitating removal of slag from weld metal when welding a workpiece with an electrode, said method comprising:
adjusting the welding composition such that the weight ratio of aluminum oxide to magnesium oxide in the slag is at least about 2:1; wherein said step of adjusting the welding composition includes increasing the amount of total aluminum in the electrode or decreasing the amount of magnesium in the electrode and,
adjusting the welding composition such that the electrode has an atomic ratio of total aluminum to total magnesium of at least about 1.5:1, wherein said atomic ratio of total aluminum to total magnesium is about 1.6:1, about 1.7:1,
about 1.8:1, about 1.9:1, about 2:1, or more than 2:1 and,
wherein said aluminum content of said electrode is selected to deposit up to about 1.4 weight percent aluminum in the weld metal and,
wherein said electrode includes aluminum oxide.

2. The method as defined in claim 1, wherein said electrode is a flux cored electrode.

3. The method as defined in claim 1 or 2, wherein said aluminum content of said electrode is selected to deposit up to about 1.1 weight percent aluminum in the weld metal.

4. The method as defined in any one of claims 1 to 3, wherein said step of adjusting the welding composition is performed by adding an agent to the welding composition selected from the group consisting of aluminum, aluminum oxide, ferro-aluminum, intermetallics of aluminum, and combinations thereof.

5. The method as defined in any one of claims 1 to 4, wherein said electrode includes magnesium oxide.

6. A cored metal electrode adapted for self-shielded flux-cored are welding processes, the electrode including an atomic ratio of total aluminum to total magnesium of at least about 1.5:1, wherein said atomic ratio of total aluminum to total magnesium is about 1.6:1, about 1.7:1, about 1.8:1, about 1.9:1, about 2:1, or more than 2:1
and the aluminum content in the electrode is controlled so that the upper limit of aluminum in the weld metal is about 1.4 weight percent, wherein said electrode includes aluminum oxide.

7. The cored metal electrode as defined in claim 6, wherein said aluminum content of said electrode is selected to deposit up to about 1.1 weight percent aluminum in the weld metal.

8. The cored metal electrode as defined in any one of claims 6 or 7, wherein said electrode includes magnesium oxide.

9. Use of a cored metal electrode as defined in any one of claims 6 to 8 in a method for facilitating the removal of slag resulting from arc welding a cored electrode.

## Patentansprüche

1. Verfahren zum Vereinfachen des Entfernens von Schlacke von Schweißmetall beim Schweißen eines Werkstücks mit einer Elektrode, wobei das Verfahren Folgendes umfasst:
Justieren der Schweißzusammensetzung dergestalt, dass das Gewichtsverhältnis von Aluminiumoxid zu Magnesiumoxid in der Schlacke mindestens etwa 2:1 beträgt; wobei der Schritt des Justierens der Schweißzusammensetzung das Erhöhen der Menge an Gesamtaluminium in der Elektrode oder das Verringern der Menge an Magnesium in der Elektrode enthält, und
Justieren der Schweißzusammensetzung dergestalt, dass die Elektrode ein Atomverhältnis von Gesamtaluminium zu Gesamtmagnesium von mindestens etwa 1,5:1 hat, wobei das Atomverhältnis von Gesamtaluminium zu Gesamtmagnesium etwa 1,6:1, etwa 1,7:1, etwa 1,8:1, etwa 1,9:1, etwa 2:1, oder mehr als 2:1 beträgt, und
wobei der Aluminiumgehalt der Elektrode so gewählt wird, dass bis zu etwa 1,4 Gewichtsprozent Aluminium im Schweißmetall abgeschieden werden, und
wobei die Elektrode Aluminiumoxid enthält.

2. Verfahren nach Anspruch 1, wobei die Elektrode eine Flussmittelkern-Elektrode ist.

3. Verfahren nach Anspruch 1 oder 2, wobei der Aluminiumgehalt der Elektrode so gewählt wird, dass bis zu etwa 1,1 Gewichtsprozent Aluminium im Schweißmetall abgeschieden werden.

4. Verfahren nach einem der Ansprüche 1 bis 3, wobei der Schritt des Justierens der Schweißzusammensetzung ausgeführt wird, indem der Schweißzusammensetzung ein Agens beigegeben wird, das aus folgender Gruppe ausgewählt ist: Aluminium, Aluminiumoxid, Ferro-Aluminium, Zwischenmetalle von Aluminium, und Kombinationen davon.

5. Verfahren nach einem der Ansprüche 1 bis 4, wobei die Elektrode Magnesiumoxid enthält.

6. Mit einem Kern versehene Metallelektrode, die für selbstabschirmende Flussmittelkern-Lichtbogenschweißprozesse ausgelegt ist, wobei die Elektrode ein Atomverhältnis von Gesamtaluminium zu Gesamtmagnesium von mindestens etwa 1,5:1 aufweist, wobei das Atomverhältnis von Gesamtaluminium zu Gesamtmagnesium etwa 1,6:1, etwa 1,7:1, etwa 1,8:1, etwa 1,9:1, etwa 2:1 oder mehr als 2:1 beträgt,
und der Aluminiumgehalt in der Elektrode so gesteuert wird, dass die Obergrenze von Aluminium im Schweißmetall etwa 1,4 Gewichtsprozent beträgt, wobei die Elektrode Aluminiumoxid enthält.

7. Mit einem Kern versehene Metallelektrode nach Anspruch 6, wobei der Aluminiumgehalt der Elektrode so gewählt wird, dass bis zu etwa 1,1 Gewichtsprozent Aluminium im Schweißmetall abgeschieden werden.

8. Mit einem Kern versehene Metallelektrode nach einem der Ansprüche 6 oder 7, wobei die Elektrode Magnesiumoxid enthält.

9. Verwenden einer mit einem Kern versehenen Metallelektrode nach einem der Ansprüche 6 bis 8 in einem Verfahren zum Vereinfachen des Entfernens von Schlacke, die durch das Lichtbogenschweißen einer mit einem Kern versehenen Elektrode entsteht.

## Revendications

1. Procédé destiné à faciliter l'enlèvement de scories d'un métal soudé lors d'un soudage d'une pièce d'ouvrage avec une électrode, ledit procédé comprenant :
l'ajustement de la composition de soudage de sorte que le rapport de poids d'un oxyde d'aluminium sur un oxyde de magnésium dans les scories soit d'au moins environ 2:1 ; dans lequel ladite étape de l'ajustement de la composition de soudage comprend l'augmentation de la quantité d'aluminium total dans l'électrode ou la réduction de la quantité de magnésium dans l'électrode ; et
l'ajustement de la composition de soudage de sorte que l'électrode ait un rapport atomique d'aluminium total sur magnésium total d'au moins environ 1,5:1, dans lequel ledit rapport atomique d'aluminium total sur magnésium total est d'environ 1,6:1, d'environ 1,7:1, d'environ 1,8:1, d'environ 1,9:1, d'environ 2:1 ou de plus de 2:1 ; et
dans lequel ladite teneur en aluminium de ladite électrode est sélectionnée pour déposer jusqu'à environ 1,4 pour cent en poids d'aluminium dans le métal soudé ; et
dans lequel ladite électrode comprend un oxyde d'aluminium.

2. Procédé selon la revendication 1, dans lequel ladite électrode est une électrode à fil fourré.

3. Procédé selon la revendication 1 ou 2, dans lequel ladite teneur en aluminium de ladite électrode est sélectionnée pour déposer jusqu'à environ 1,1 pour cent en poids d'aluminium dans le métal soudé.

4. Procédé selon l'une quelconque des revendications 1 à 3, dans lequel ladite étape de l'ajustement de la composition de soudage est effectuée en ajoutant un agent à la composition de soudage sélectionné dans le groupe se composant d'aluminium, d'oxyde d'aluminium, de ferro-aluminium, de composés intermétalliques d'aluminium et de combinaisons de ceux-ci.

5. Procédé selon l'une quelconque des revendications 1 à 4, dans lequel ladite électrode comprend un oxyde de magnésium.

6. Electrode métallique fourrée adaptée pour des processus de soudage à l'arc à fil fourré autoblindé, l'électrode comprenant un rapport atomique d'aluminium total sur magnésium total d'au moins environ 1,5:1, dans lequel ledit rapport atomique d'aluminium total sur magnésium total est d'environ 1,6:1, d'environ 1,7:1, d'environ 1,8:1, d'environ 1,9:1, d'environ 2:1 ou de plus de 2:1 ;
et la teneur en aluminium de l'électrode est régulée de sorte que la limite supérieure d'aluminium dans le métal soudé soit d'environ 1,4 pour cent en poids, dans laquelle ladite électrode comprend un oxyde d'aluminium.

7. Electrode métallique fourrée selon la revendication 6, dans laquelle ladite teneur en aluminium de ladite électrode est sélectionnée pour déposer jusqu'à environ 1,1 pour cent en poids d'aluminium dans le métal soudé.

8. Electrode métallique fourrée selon l'une quelconque des revendications 6 et 7, dans laquelle ladite électrode comprend un oxyde de magnésium.

9. Utilisation d'une électrode métallique fourrée selon l'une quelconque des revendications 6 à 8 dans un procédé pour faciliter l'enlèvement de scories découlant d'un soudage à l'arc d'une électrode fourrée.
